# EUROPÄISCHE PATENTSCHRIFT

(11) **EP 0 550 720 B1**
(45) Veröffentlichungstag und Bekanntmachung des Hinweises auf die Patenterteilung: **18.03.1998**
(21) Anmeldenummer: 92915064.7
(22) Anmeldetag: 13.07.1992
(51) Int. Cl.: C09K 19/38, C09K 19/40, C08J 3/24, G02F 1/00, C08G 77/38

(54) **FLUSSIGKRISTALLINE ELASTOMERE ODER DUROMERE MIT FIXIERTER ANISOTROPER NETZWERKSTRUKTUR**
LIQUID-CRYSTAL ELASTOMERS OR DUROMERS WITH A PERMANENTLY FIXED ANISOTROPIC RETICULAR STRUCTURE
ELASTOMERES OU DUROMERES A CRISTAUX LIQUIDES A STRUCTURE RETICULEE ANISOTROPE FIXE

(30) Priorität: 26.07.1991 DE 4124859
(43) Veröffentlichungstag der Anmeldung: 14.07.1993
(73) Patentinhaber: Finkelmann, Heino, Professor Dr., D-79211 Denzlingen (DE)
(72) Erfinder: FINKELMANN, Heino, D-7819 Denzlingen (DE); KÜPFER, Jürgen, D-7800 Freiburg (DE)
(74) Vertreter: Wilhelms, Rolf E., Dr.
(86) Internationale Anmeldenummer: EP9201591
(87) Internationale Veröffentlichungsnummer: WO9303114

(56) Entgegenhaltungen:
- EP-A- 0 293 911
- DE-A- 3 925 382
- US-A- 4 710 547
- PATENT ABSTRACTS OF JAPAN vol. 14, no. 214 7. Mai 1990

## Beschreibung

Die Erfindung betrifft flüssigkristalline Elastomere oder Duromere mit fixierter anisotroper Netzwerkstruktur sowie Verfahren zu ihrer Herstellung.

Flüssigkristalline Elastomere sind Polymernetzwerke, die z.B. dadurch hergestellt werden können, daß die Polymerketten flüssigkristalliner Seitenkettenpolymere durch bifunktionelle Moleküle miteinander verknüpft werden. Bei diesen Materialien sind oberhalb der Glastemperatur zwar die Kettensegmente und die mesogenen Gruppen beweglich, das Material als solches behält jedoch infolge der Vernetzung seine Formstabilität. Im mechanisch unbelasteten Zustand ist die Orientierung des nematischen Direktors der mesogenen Gruppen makroskopisch uneinheitlich und das Elastomer erscheint opak. Wird jedoch eine Probe eines elastomeren Materials wie z.B. ein Elastomerfilm oberhalb der Glastemperatur uniaxial verstreckt, so orientieren sich die Direktoren der mesogenen Gruppen parallel zur Richtung der Zugspannung. Die Probe wird durchsichtig und entspricht in ihren optischen Eigenschaften einem Einkristall gleicher Dimension. Wird die Elastomer-Probe entlastet, kehrt sie aufgrund ihrer Elastizität in den ungeordneten, opaken Zustand zurück.

Derartige makroskopische organische Einkristalle sind von größtem Interesse für Anwendungen z.B. in der integrierten Optik und sie können weiter z.B. zur Realisierung von Kerr-Zellen, Pockels-Zellen, Frequenzverdopplern oder dichroitischen Filtern verwendet werden.

Zur Konservierung des Einkristall-Zustandes ist z.B. vorgeschlagen worden, das orientierte Elastomer bei anliegender mechanischer Spannung schnell unter die Glastemperatur abzukühlen (J. Schätzle, H. Finkelmann, Mol. Cryst. Liq. Cryst., 142 (1987) 85). Nachteilig bei diesem Verfahren ist jedoch, daß der Arbeitstemperaturbereich dieser "eingefrorenen" Einkristalle durch die Glastemperatur nach oben begrenzt ist.

In JP 02-074924 ist vorgeschlagen worden, zur Erzeugung von Filmen mit Monodomänenstruktur flüssigkristalline Polymere mit einer Molmasse zwischen 1.000 und 10.000 auf einer mit einer Ausrichtungsschicht versehenen Substratplatte zu orientieren und bei anliegendem magnetischen Feld zu vernetzen. In JP 02-047628 wird vorgeschlagen, ferroelektrische flüssigkristalline Polymere elektrostatisch auszurichten und zu vernetzen. Eine andere Variante (JP 01-297431) sieht vor, daß die Orientierung des Films auf einer Wasseroberfläche erfolgt, wo dann anschließend die Vernetzung durchgeführt wird.

All diesen Verfahren ist gemeinsam, daß der erreichbare Ordnungsgrad der Filme nicht allen Anforderungen genügt und daß die Filme zu viele Defektstrukturen aufweisen. Weiterhin sind mit den herkömmlichen Verfahren nur relativ dünne Filme erhältlich.

Eine Aufgabe der vorliegenden Erfindung bestand in der Bereitstellung 3-dimensional vernetzter flüssigkristalliner Polymere mit fixierter anisotroper Netzwerkstruktur, welche die bei herkömmlichen Materialien beobachteten Nachteile nicht oder nur in geringerem Ausmaß aufweisen. Eine weitere Aufgabe der vorliegenden Erfindung bestand darin, ein Verfahren zur Herstellung dieser verbesserten organischen Einkristalle anzugeben. Weitere Aufgaben der vorliegenden Erfindung entnimmt der Fachmann ohne weiteres der nachfolgenden detaillierten Beschreibung der Erfindung.

Es wurde gefunden, daß diese Aufgaben durch das erfindungsgemäße Verfahren sowie durch die Bereitstellung der erfindungsgemäßen Elastomere bzw. Duromere mit fixierter anisotroper Netzwerkstruktur gelöst werden können.

Gegenstand der Erfindung ist somit ein Verfahren zur Herstellung von flüssigkristallinen Elastomeren oder Duromeren mit fixierter anisotroper Netzwerkstruktur, dadurch gekennzeichnet, daß Elastomere, enthaltend reaktive Reste mit mindestens einer nicht umgesetzten funktionellen Gruppe, in einem ersten Schritt durch Einwirken einer mechanischen Spannung uni- oder biaxial orientiert werden, wobei diese Orientierung in einem nachfolgenden zweiten Schritt durch Verknüpfung zumindestens eines Teils der reaktiven Reste mit Polymerketten fixiert wird.

Gegenstand der Erfindung sind weitere flüssigkristalline Elastomere oder Duromere mit fixierter anisotroper Netzwerkstruktur, welche nach diesem Verfahren erhältlich sind sowie flüssigkristalline Elastomere der Formel I.

Das erfindungsgemäße Verfahren besteht aus 2 aufeinanderfolgenden Reaktionsschritten:
- **Schritt 1:**: Ein flüssigkristallines Elastomer, enthaltend reaktive Reste mit nicht umgesetzten funktionellen Gruppen, wird durch Einwirken einer mechanischen Spannung uniaxial oder biaxial verstreckt.
- **Schritt 2:**: Die durch Anlegen eines mechanischen "Feldes" erzeugte Orientierung des Elastomers wird "chemisch" eingefroren, indem zumindest ein Teil der reaktiven Reste mit Polymerketten verknüpft wird.

Die in Schritt 1 orientierten flüssigkristallinen Elastomere werden bevorzugt ausgewählt aus der Gruppe der Elastomere der Formel I 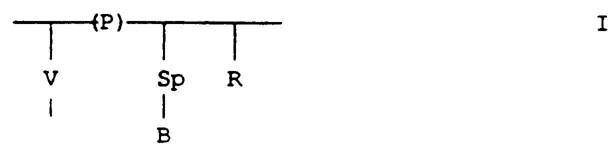 worin
- (P): eine Polymerketteneinheit,
- Sp: eine bivalente Spacergruppe,
- B: einen organischen "rod-like"-Rest mit mindestens zwei sechsgliedrigen Gruppen, einen "disk-like"- oder einen "board-like"-Rest,
- V: eine Polymerketten vernetzende Gruppe und
- R: einen reaktiven Rest, enthaltend mindestens eine nicht umgesetzte funktionelle Gruppe,
bedeuten.

Durch Formel I werden die bevorzugten Elastomere nur stark schematisch beschrieben. So ist es z.B. nicht erforderlich, daß jede Hauptketteneinheit eine mesogene Einheit trägt. Weiterhin soll Formel I auch Copolymere mit unterschiedlichen Polymerketteneinheiten umfassen. Außerdem stimmt die Zahl der Gruppen V, R und Sp-B i.a. nicht überein. Trotz dieser Mängel erscheint die Formel I zur schematisch-bildhaften Repräsentierung der Elastomere der Formel I geeignet und wird daher verwendet.

Die Herstellung flüssigkristalliner Elastomere der Formel I erfolgt analog zu an sich bekannten Polymerisationsverfahren, wie sie in der Literatur beschrieben sind (z.B. in den Standardwerken wie Ocian, Principles of Polymerization, McGraw Hill, New York), und zwar unter Reaktionsbedingungen, die für die Umsetzungen bekannt und geeignet sind. Dabei kann man auch von an sich bekannten, hier nicht näher erwähnten Varianten Gebrauch machen.

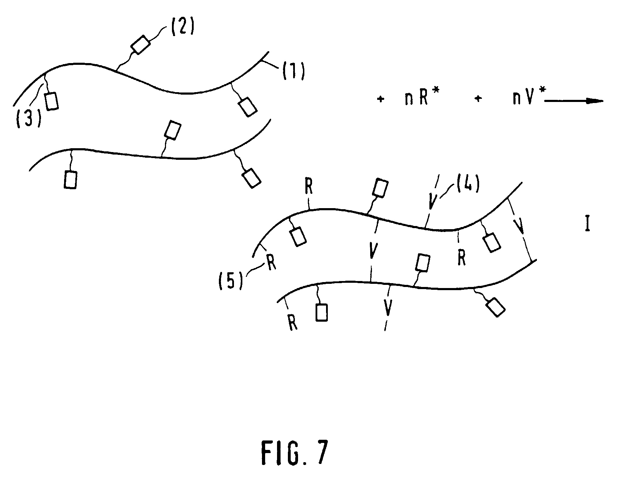

Flüssigkristalline Elastomere der Formel I können z.B. durch polymeranaloge Additionsreaktionen von Seitenkettenpolymeren mit Vernetzermolekülen V* und reaktiven Verbindungen vom Typ R* erhalten werden, wie dies schematisch in Fig. 7 gezeigt ist.

In dieser schematischen Darstellung sind durch (2) die mesogenen Seitengruppen bezeichnet, die über flexible Spacer (3) terminal, wie hier dargestellt, oder aber auch lateral an ein Polymerrückgrad (1) gebunden sind. (4) stellt eine vernetzende Einheit zwischen zwei benachbarten Polymerketten dar. Im Unterschied zu herkömmlichen Elastomeren weisen die Elastomere der Formel I zusätzlich reaktive Reste R (5) auf.

Durch den Index * wird angedeutet, daß die Vernetzermoleküle und die reaktiven Verbindungen i.a. 2 oder mehr reaktionsfähige Stellen aufweisen, wobei bei den reaktiven Verbindungen mindestens eine der reaktionsfähigen Stellen durch eine deutlich geringere Reaktivität gekennzeichnet ist als die andere bzw. anderen reaktionsfähigen Stellen.

Bevorzugt sind weiter auch Verfahren zur Herstellung von Elastomeren der Formel I, bei denen die Gruppierungen Sp-B sowie R und ggf. V an vernetzte oder unvernetzte Polymerketten -P- angeheftet werden (z.B. durch Aufpfropfungsreaktionen, vgl. DE 38 17 088).

Elastomere der Formel I können weiter durch Polymerisation von Monomeren und/oder Oligomeren in Anwesenheit von reaktiven Verbindungen R* und ggf. von Vernetzern V* hergestellt werden. Wenn die Monomere und/oder Oligomere zumindestens überwiegend nur 2 Verknüpfungsstellen aufweisen, ist die Anwesenheit von Vernetzern V* erforderlich, wobei zumindest eine der reaktionsfähigen Stellen der reaktiven Verbindung R* bei den Bedingungen, unter denen die Verknüpfungsstellen der Monomere und/oder Oligomere und die reaktiven Stellen der Vernetzer umgesetzt werden, noch nicht reagieren. Falls die Monomere und/oder Oligomere mehr als 2 Verknüpfungsstellen im Molekül aufweisen, kann der Vernetzer ggf. auch weggelassen werden. Monomere bzw. Oligomere mit mehr als 2 Verknüpfungsstellen im Molekül sind häufig bevorzugt; beispielhaft seien hier 2 C-C-Doppelbindungen aufweisende Monomere und/oder Oligomere genannt, aber auch Monomere oder Oligomere mit einer C-C-Doppelbindung und einer oder mehreren Hydroxylgruppen und/oder Carbonylgruppen und/oder anderen zur Polymerisation befähigten Gruppen können vorzugsweise verwendet werden.

Die Synthese des Elastomers aus niedermolekularen Verbindungen hat häufig insbesondere den Vorteil, daß durch Variation der Syntheseparameter wie z.B. der Polymerisationstemperatur, der Konzentration des Polymerisationsinitiators, dem relativen Massenverhältnis von Comonomeren bzw. Cooligomeren etc. wichtige Eigenschaften des Elastomers wie z.B. seine Elastizität oder Doppelbrechung oder auch andere Eigenschaften beeinflußt und innerhalb gewisser Grenzen gezielt eingestellt werden können.

Die niedermolekularen Verbindungen sind bevorzugt flüssigkristallin und/oder tragen bevcrzugt bereits über Spacergruppen Sp gebundene mesogene Gruppen B. Wie bereits erwähnt, ist aber auch das anschließende Anheften dieser Gruppen an das Polymergerüst möglich.

Die Herstellung flüssigkristalliner Elastomere der Formel I erfolgt bevorzugt analog zu Verfahren, wie sie in DE 38 17 088, DE 38 11 334 und DE 36 21 581 beschrieben sind, wobei zusätzlich reaktive Verbindungen R* mit umgesetzt werden.

Flüssigkristalline Elastomre können verschiedene flüssigkristalline Phasen (nematisch, smektisch, diskotisch, cholesterisch) aufweisen. Elastomere mit nematischen, smektischen und/oder cholesterischen Phasen sind bevorzugt. Von den Elastomeren, die nematische und/oder smektische Phasen aufweisen, sind diejenigen besonders bevorzugt, bei denen sich der Direktor bei Dehnung des Materials senkrecht beziehungsweise bei Kompression parallel zur Deformationsachse orientiert.

Als polymeres Rückgrat -(-P-)- kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10; es kommen jedoch auch Oligomere mit 3 bis 15, insbesondere mit 4 bis 7 Monomereinheiten, in Frage.

Vorzugsweise werden Polymere mit C-C-Hauptketten, insbesondere Polyacrylate, -methacrylate, -α-halogenacrylate, -α-cyanacrylate, -acrylamide, -acrylnitrile oder -methylen-malonate eingesetzt. Weiterhin bevorzugt sind auch Polymere mit Heteroatomen in der Hauptkette beispielsweise Polyether, -ester, -amide, -imide, -phosphazene oder -urethane oder insbesondere Polysiloxane.

Als Spacer kommen vor allem lineare oder verzweigte Alkylengruppen mit 1-20 C-Atomen in Betracht, worin auch eine oder mehrere nicht benachbarte CH₂-Gruppen durch -O-, -S-, -CO-, -O-CO-, -S-CO-, -O-COO-, -CO-S-, -CO-O-, -CH-Halogen, -CHCN-, -CH=CH- und -C≡C- ersetzt sein können.

Als Spacer sind beispielsweise folgende Gruppen geeignet: Ethylen, Propylen, Butylen, Pentylen, Hexylen, Octylen, Decylen, Undecylen, Dodecylen, Octadecylen, Ethylenoxyethylen, Methylenoxybutylen, Ethylenthioethylen, Ethylen-N-methyliminoethylen oder 1-Methylalkylen.

B bedeutet bevorzugt eine stäbchenförmige ("rod-like") oder eine brettförmige ("board-like") mesogene Gruppe.

Als stäbchenförmige mesogene Gruppen werden i.a. niedermolekulare flüssigkristalline Reste verwendet, die über ausreichend flexible Spacer lateral oder terminal an die Polymerkette gebunden sind. Bei einer terminalen Verknüpfung, die i.a. bevorzugt ist, können die nematischen Reste um die Moleküllängsachse rotieren und weisen daher eine Zylindersymmetrie auf.

Wird dagegen durch eine starre Spacergruppe die Rotation der nematischen Reste praktisch unterbunden, erhält man brettförmige mesogene Gruppen. Es können jedoch auch andere Reste mit brettförmiger Geometrie verwendet werden.

In flüssigkristallinen Polymeren mit brettförmigen mesogenen Gruppen können nicht nur die Moleküllängsachsen parallel angeordnet sein, sondern es ist darüber hinaus noch eine Orientierungsfernordnung bezüglich der Querachsen möglich. Solche flüssigkristalline Polymere bezeichnet man als biaxial nematisch.

Besonders bevorzugt bedeutet R einen Rest der Formel III

R¹-(A¹-Z¹)ₙ-A²-Z²-A³- III

worin
- R¹: F, CN oder ein unsubstituierter oder durch mindestens ein Halogenatom substituierter Alkylrest mit jeweils 1-15 C-Atomen, worin eine oder mehrere nicht benachbarte CH₂-Gruppen durch O- und/ oder S-Atome und/oder durch -CC-, -O-CO-, -CO-O-, -O-CO-O-, -S-CO- und/oder -CO-S- und/oder -CH=CH-Gruppen ersetzt sein können,
- Z¹ und Z²: jeweils unabhängig voneinander -CO-O-, -O-CO-, -CH₂CH₂-, -CH₂-O-, -OCH₂-, -C≡C- oder eine Einfachbindung,
- A¹, A² und A³: jeweils unabhängig voneinander eine 1,4-Phenylengruppe, worin auch eine oder mehrere CH-Gruppen durch N ersetzt sein können, eine 1,4-cyclohexylengruppe, worin auch eine oder zwei nicht benachbarte CH₂-Gruppen durch O und/oder S ersetzt sein können, eine 1,4-Cyclohexenylengruppe, eine 1,4-Bicyclo(2,2,2)-octylengruppe, eine Piperidin-1,4-diylgruppe, eine Naphthalin-2,6-diylgruppe, eine Decahydronaphthalin-2,6-diylgruppe, eine 1,2,3,4-Tetrahydronaphthalin-2,6-diylgruppe, wobei alle diese Gruppen unsubsituiert oder durch Halogen, Nitril und/oder 1-4-C-Alkyl ein- oder mehrfach subsituiert sein können, und
- n: 0, 1, 2 oder 3
bedeuten.

Durch die Formel III sind 2-, 3-, 4- und 5-kernige Reste der Teilformel III1 - III4 umfaßt:

R¹-A²-Z²-A³ III1

R¹-A¹-Z¹-A²-Z²-A³ III2

R¹-A¹-Z¹-A¹-Z¹-A²-Z²-A³ III3

R¹-A¹-Z¹-A¹-Z¹-A¹-Z¹-A²-Z²-A³ III4

In den mesogenen Resten der Formel III bedeutet R1 bevorzugt eine unsubstituierten oder durch mindestens ein Halogenatom substituierten Alkyl- oder Alkenylrest, worin eine oder zwei nicht benachbarte CH₂-Gruppen dieser Reste durch C-Atome und/oder durch -O-CO-, -CO-O- und/oder -O-CO-O- Gruppen ersetzt sein können.

Halogen bedeutet vorzugsweise F oder Cl.

Ferner sind die mesogenen Reste der Formel III bevorzugt, worin R¹ CN, F oder Cl bedeutet.

Falls R¹ ein Alkylrest oder Alkoxyrest bedeutet, so kann dieser geradkettig oder verzweigt sein. Vorzugsweise ist er geradkettig, hat 2, 3, 4, 5, 6, 7 oder 8 C-Atomen und bedeutet demnach bevorzugt Ethyl, Propyl, Butyl, Pentyl, Hexyyl, Heptyl, Octyl, Ethoxy, Propoxy, Butoxy, Pentoxy, Hexoxy, Heptoxy oder Octoxy, ferner Methyl, Nonyl, Decyl, Undecyl, Dodecyl, Tridecyl, Tetradecyl, Pentadecyl, Methoxy, Nonoxy, Decoxy, Undecoxy, Dodecoxy, Tridedoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5-, oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R¹ einen Alkenylrest bedeutet, so kann dieser geradkettig oder verzweigt sein. Vorzugsweise ist er geradkettig und hat 2 bis 10 C-Atome. Er bedeutet demnach besonders Vinyl, Prop-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Mesogene Reste der Formel IIImit verzweigter Flügelgruppe R¹ können gelegentlich z.B. wegen einer Verminderung der Neigung zu Kristallisation als Comonomere von Bedeutung sein. Verzweigte Gruppen dieser Art enthalten in der Regel nicht mehr als eine Kettenverzweigung. Bevorzugte verzweigte Reste R¹ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5-Methylheptyloxycarbonyl, 2-Methylbutyryloxy, 3-Methylvaleryloxy, 4-Methylhexanoyloxy, 2-Chlorproponyloxy, 2-Chlor-3-methylbutyryloxy, 2-Chlor-4-methylvaleryloxy, 2-Chlor-3-methylvaleryloxy, 2-Methyl-3-oxapentyl, 2-Methyl-3-oxahexyl.

2-, 3- und 4-kernige mesogene Reste sind bevorzugt. Weiter bevorzugt sind solche Reste, die nicht mehr als eine 1,4-Bicyclo(2,2,2)-octylengruppe, Piperidin-1,4-diylgruppe oder 1,2,3,4-Tetrahydronaphthalin-2,6-diylgruppe enthalten.

In 5-kernigen mesogenen Resten ist Z² bevorzugt eine Einfachbindung oder -CH₂CH₂-.

Von den mesogenen Resten der Formel III, die eine heterocyclische Gruppe enthalten, sind die mit einer Pyridin-2,5-diylgruppe, Pyridazin-2,5-diylgruppe, Primidin-2,5-diylgruppe oder Piperidin-1,4-diylgruppe besonders bevorzugt.

Im folgenden wird eine kleinere Gruppe von besonders bevorzugten mesogenen Resten der Formeln III1, III2 und III3 aufgeführt. Dabei bedeutet der Einfachheit halber Cyc eine 1,4-Cyclohexylengruppe, Dio eine Dioxan-2,5-diylgruppe, Cy eine 1,4-Cyclohexylengruppe, worin auch eine oder zwei nicht benachbarte CH₂-Gruppen durch -O- ersetzt sein können, Phe eine 1,4-Phenylengruppe, worin auch eine oder mehrere CH-Gruppen durch N ersetzt sein können. PheX eine 1,4-Phenylengruppe, die ein- oder zweifach durch F, Cl und/oder CH₃ substituiert ist, Bi eine 1,4-Bicyclo[2.2.2]octylgruppe, Pip eine Piperidin-1,4-diylgruppe und Nap eine Deca-, Tetrahydronaphthalin-2,6-diyl- oder Naphthalin-2,6-diylgruppe.

Besonders bevorzugte mesogene Reste der Teilformeln III1 sind die der Teilformeln III1-1 bis III1-8:

R₁-Cyc-Z₂-Cyc- III1-1

R₁-Phe-Z₂-Phe- III1-2

R₁-Phe-Z₂-PheX- III1-3

R₁-Phe-Z₂-Cyc III1-4

R₁-Cyc-Z₂-Phe- III1-5

R₁-Phe-Z₂-PheX- III1-6

R₁-Cyc-Z₂-PheX- III1-7

R₁-PheX-Z₂-Phe- III1-8

In den Verbindungen der Teilformeln III1-1 bis IIil-8 bedeutet R ganz besonders bevorzugt eine Alkyl- oder Alkenylgruppe, ferner Alkoxy oder Alkanoyloxy mit jeweils 1-13 C-Atomen. Weiter ist in diesen Verbindungen Z² ganz besonders bevorzugt eine Estergruppe C (-CO-O- oder -O-CO-), -CH₂CH₂- oder eine Einfachbindung.

Besonders bevorzugt mesogene Reste der Teilformeln III2 sind die der Teilformeln III2-1 bis III2-16:

R¹-Phe-Z¹-Phe-Z²-Phe- III2-1

R¹-PheX-Z¹-Phe-Z²-Phe- III2-2

R¹-Phe-Z¹-Phe-Z²-PheX- III2-3

R¹-Cyc-Z¹-Cyc-Z²-Cyc- III2-4

R¹-Cyc-Z¹-Phe-Z²-Phe- III2-5

R¹-Cyc-Z¹-Cyc-Z²-Phe- III2-6

R¹-Cyc-Z¹-Cyc-Z²-Dio- III2-7

R¹-Cyc-Z¹-Phe-Z²-PheX- III2-8

R¹-Cyc-Z¹-Cyc-Z²-PheX- III2-9

R¹-Bi-Ccc-Z²-Cyc- III2-10

R¹-Nap-Z¹-Cyc-Z²-Phe- III2-11

R¹-Cyc-Z¹-Phe-Z²-Phe- III2-12

R¹-Dio-Z¹-Cyc-Z²-Cyc- III2-13

R¹-Phe-Z¹-Cyc-Z²-Cyc- III2-14

R¹-Cyc-Z¹-Phe-Z²-Cyc- III2-15

R¹-Cyc-Z¹-PheX-Z²-Cyc- III2-16

Von den Verbindungen der Teilformeln III2-1 bis III2-16, die eine 1,4-Phenylengruppe enthalten, worin eine oder zwei CH₂-Gruppen durch N ersetzt sind, sind diejenigen mit einer Pyridin-2,5-diylgruppe oder Pyrimidin-2,5-diylgruppe ganz besonders bevorzugt.

Besonders bevorzugte mesogene Reste der Teilformeln III3 sind die der Teilformeln III3-1 bis III3-19:

R¹-Phe-Z¹-Phe-Z¹-Phe-Z²-Phe- III3-1

R¹-Cyc-Z¹-Cyc-Z¹-Cyc-Z²-Cyc- III3-2

R¹-Cyc-Z¹-Phe-Z¹-Phe-Z²-Phe- III3-3

R¹-Cyc-Z¹-Cyc-Z¹-Phe-Z²-Phe- III3-4

R¹-Cyc-Z¹-Cyc-Z¹-Cyc-Z²-Phe- III3-5

R¹-Cyc-Z¹-Phe-Z¹-Phe-Cyc- III3-6

R¹-Cyc-Z¹-Cyc-Z¹-Phe-Cyc- III3-7

R¹-Cyc-Z¹-Phe-Z¹-Cyc-Z²-Cyc- III3-8

R¹-Phe-Z¹-Cyc-Z¹-Cyc-Z²-Cyc- III3-9

R¹-Phe-Z¹-Phe-Z¹-Cyc-Z²-Cyc- III3-10

R¹-Phe-Z¹-Phe-Z¹-Phe-Z²-PheX- III3-11

R¹-Cyc-Z¹-Cyc-Z¹-PheX-Z²-Phe- III3-12

R¹-Cyc-Z¹-Cyc-Z¹-Phe-Z²-PheX- III3-13

R¹-Cyc-Z¹-PheX-Z¹-Phe-Z²-Cyc- III3-14

R¹-Cyc-Z¹-Phe-Z¹-PheX-Z²-Cyc- III3-15

R¹-PheX-Z¹-Phe-Z¹-Cyc-Z²-Cyc- III3-16

R¹-Dio-Z¹-Cyc-Z¹-Cyc-Z²-Cyc- III3-17

R¹-Cyc-Z¹-Cyc-Z¹-Cyc-Z²-Phe- III3-18

R¹-Cyc-Z¹-Pip-Z¹-Phe-Z²-Phe- III3-19

In den Verbindungen der Teilformeln III3-1 bis III3-19 ist ganz besonders bevorzugt mindestens eine der beiden Z¹-Gruppen oder Z² eine Einfachbindung.

Weiter bevorzugt sind scheibchenförmige ("disk-like") mesogene Gruppen und insbesondere diskotische Gruppen als Rest B. Diese Gruppen ordnen sich bei ausreichender Flexibilität der Spacer oberhalb von T_{G} manchmal spontan, d.h. ohne Einwirkung eines äußeren Feldes oder mechanische Spannung, parallel zueinander an.

Beispielhaft sei eine Reihe diskotischer flüssigkristalliner Verbindungen genannt, wobei diese Aufzählung die Erfindung lediglich erläutern soll, ohne sie jedoch zu begrenzen:
(1) hexasubstituiertes Benzol 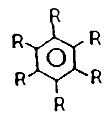
(2) 2, 3, 6, 7, 10, 11-hexasubstituierte Triphenyle 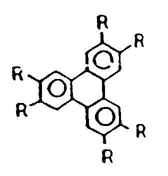
(3) 2, 3, 7, 8, 12, 13-hexasubstituierte Truxene bzw. deren oxidierte Homologe 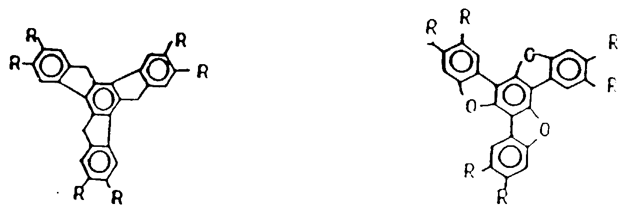
(4) 1, 2, 3, 5, 6, 7-hexasubstituierte Anthrachinone 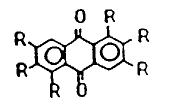
(5) substituierte Cu-Komplexe 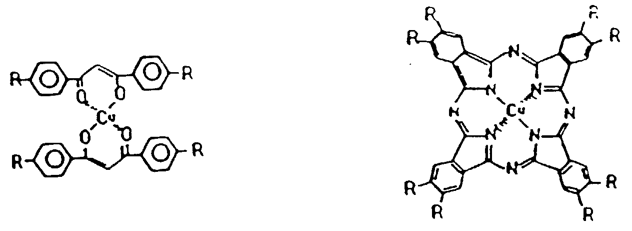
(6) Tetraarylbipyranylidium 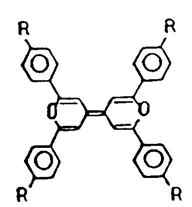
(7) Porphyrinderivate

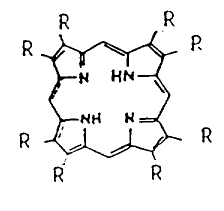

Als Beispiele fur Vernetzer V* seien Schwefel, Hexamethylentetramin, Paraformaldehyd, Divinylbenzol, Fettsäureamide, Oligoalkene, Oligosulfide und Oligoisocyanate genannt.

Die reaktiven Reste R* weisen mindestens 2 funktionelle Gruppen auf, wobei sich i.a. die Reaktivität mindestens einer Gruppe von der der anderen Gruppen bei den gewählten Reaktionsbedingungen unterscheidet. So ist es z.B. möglich, daß mindestens eine der reaktiven Gruppen von R* eine Vinyl-, Acryloyl- oder eine andere radikalisch polymersierbare Gruppe ist, während eine der unter den Bedingungen der radikalischen Polymerisation nicht umgesetzte Gruppe eine Hydroxyl-, Carboxyl- oder Aminogruppe ist. Es ist aber z.B. auch möglich, daß die Moleküle R* Gruppen aufweisen, die nach dem gleichen Reaktionsmechanismus, allerdings unter selektiver Katalyse oder mit deutlich unterschiedlicher Reaktivität umgesetzt werden (vgl. Beispiel 1). Die reaktiven Gruppen können z.B. terminal an den Molekülen R* angeordnet sein und sind dann üblicherweise verknüpft durch eine lineare oder verzweigte C-Kette mit 1-20 C-Atomen, worin auch bis zu 8 nicht benachbarte CH₂-Gruppen durch -O-, -CO-, -COO-, OCO-, -S-, -HC=CH-, -C=C-, -CHHalogen-, -C(Halogen)₂-, -NH-, -(C₁₋₅-Alkyl)-N-, einen alicyclischen oder aromatischen Ring ersetzt sein können. Es ist aber auch möglich, daß die reaktiven Gruppen sich in nicht-terminaler Position befinden.

V* und R* können aber auch identisch sein; in diesem Fall wird die Vernetzungsreaktion z.B. durch Erniedrigung der Temperatur oder durch Variation anderer geeigneter Parameter abgebrochen, so daß nur ein Teil der vernetzenden Moleküle vollständig abreagiert hat, während der Rest entweder nur teilweise oder gar nicht umgesetzt ist und demzufolge mindestens eine reaktionsfähige funktionelle Gruppe aufweist. Es ist dabei nicht unbedingt erforderlich, daß die reaktionsfähigen Gruppen von V* bzw. R* eine unterschiedliche Reaktivität aufweisen. Die mechanische Verstreckung wird dann bei der erniedrigten Temperatur bzw. bei einem geeignet eingestellten anderen Parameter durchgeführt und durch Erhöhung der Temperatur bzw. durch Variation der oder der anderen Parameter chemisch fixiert.

Die vorstehend angeführten Beispiele für P, Sp, B, R bzw. R* und V bzw. V* sind nur beispielhaft zu verstehen und sollen die Erfindung erläutern, ohne sie zu begrenzen.

Zur Herstellung der erfindungsgemäßen Duromere oder Elastomere können neben den bevorzugten Elastomeren der Formel I auch noch weitere Elastomere verwendet werden. So sind z.B. Copolymere, die neben mesogenen auch nicht mesogene Seitengruppen enthalten, manchmal bevorzugt, um beispielsweise einen zu hohen Wert für die Doppelbrechung zu senken oder andere spezifische Materialeigenschaften zu variieren.

Elastomere, welche Seitengruppen mit nichtlinear optischen Eigenschaften aufweisen, eignen sich als Materialien für die nichtlineare Optik.

Weiterhin können auch Elastomere verwendet werden, die sowohl in dem polymeren Rückgrat als auch in den Seitengruppen mesogene Gruppen aufweisen. Derartige Elastomere können zu optisch mehrachsigen Einkristallen verstreckt werden.

Die detailiiert beschriebenen Elastomere der Formel I, welche bevorzugt sind, und die weiterhin angegebenen Elastomere sind nur beispielhaft zu verstehen und sollen die Erfindung lediglich erläutern, ohne sie zu begrenzen. Die Erfindung kann ganz allgemein auf Elastomere, enthaltend reaktive Reste mit mindestens einer nicht umgesetzten funktionellen Gruppe, angewendet werden und ist nicht auf spezielle Elastomere begrenzt.

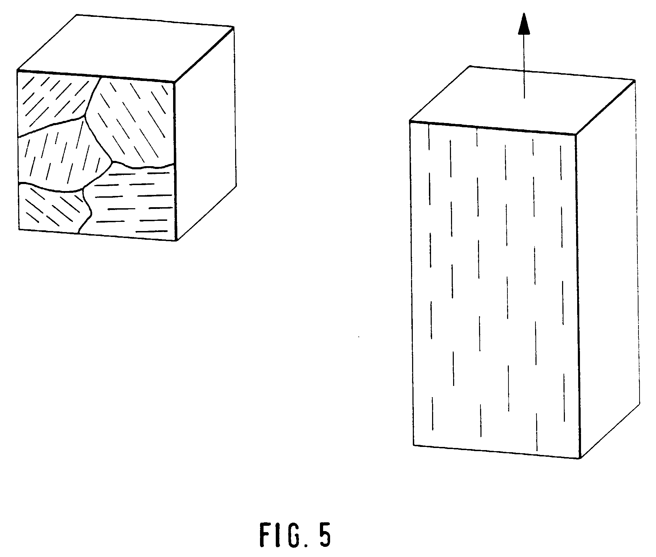

Die Elastomere werden durch Anlegen eines mechanischen "Feldes" verstreckt und dadurch orientiert. In Fig. 5 (entnommen aus: M. Ballauff, Chemie in unserer Zeit, 22, (1988) 63) ist schematisch gezeigt, daß ein Elastomer, welches im unbelasteten Zustand makroskopisch uneinheitlich orientiert ist (Polydomänenstruktur) und dadurch opak erscheint, durch Anlegen einer Zugspannung in einen hochgeordneten Zustand überführt wird, der bezüglich seiner optischen Eigenschaften einem organischen Einkristall gleicher Dimension gleicht. Das gezeigte Verhalten wird z.B. bei einem Elastomer mit uniaxialer nematischer Phase beobachtet, wo sich die nematischen Direktoren der mesogenen Gruppen parallel zur Dehnungsachse ausrichten.

Andere Orientierungen der nematischen Direktoren können z.B. erreicht werden, wenn das Elastomer biaxial verstreckt wird, d.h. wenn die mechanische Spannung gleichzeitig entlang 2 verschiedener Deformationsachsen, die vorzugsweise rechtwinklig zueinander sind, einwirkt. Komplizierbare Deformationsmuster sind möglich, aber i.a. nicht bevorzugt.

Die mechanische Spannung, die durch geeignete Vorrichtungen wie z.B. Spannklammern oder durch Aufbringen auf eine Trägerfolie auf die Probe übertragen wird, kann eine Dehnung, Kompression oder auch Scherung der Probe bewirken; während reine Torsions- oder Biegespannungen oftmals nicht zu einer gewünschten Ausrichtung der nematischen Direktoren führen, können diese Spannungen vorzugsweise mit Dehnungen oder Kompression kombiniert werden. Die aufzuwendende Spannung hängt von der Größe und Geometrie der Probe sowie insbesondere auch von deren Elastizität bzw. der Vernetzungsdichte sowie der Temperatur ab und beträgt typischwerweise zwischen 10⁻³ und 10⁻⁶ N/m², und ins- besondere zwischen 10⁻⁴ und 10⁻⁵ N/m².

Zur Erzeugung einer bipolaren Orientierung kann zusätzlich zu der mechanischen Spannung ein elektrisches Feld angelegt werden. Die Feldstärke hängt dabei z.B. von der dielektrischen Anisotropie der mesogenen Gruppen ab und beträgt typischerweise 1-50 kV/100 µm. Das zusätzliche Anlegen eines elektrischen Feldes ist bevorzugt.

Nachdem die nematischen Direktoren der mesogenen Gruppen im ersten Schritt in der gewünschten Weise orientiert sind, wird diese Orientierung in einem nachfolgenden 2. Schritt dadurch chemisch fixiert, daß das Elastomer im deformierten Zustand durch Umsetzung der freien funktionellen Gruppen der reaktiven Reste R mit benachbarten Polymerketten zusätzlich vernetzt wird.

Für diese zweite Vernetzungsreaktion kommt je nach der Natur der freien funktionellen Gruppe eine Vielzahl von Reaktionsmöglichkeiten in Betracht. Handelt es sich bei den freien funktionellen Gruppen beispielsweise um Hydroxylgruppen, so können z.B. freie Hydroxylgruppen von reaktiven Resten benachbarter Polymerketten oder aber auch freie Hydroxylgruppen reaktiver Reste mit Hydroxylgruppen von Polymerketteneinheiten etwa durch Diisocyanate miteinander verknüpft werden. Es ist natürlich z.B. auch möglich, die freie Hydroxylgruppe mit Carboxylgruppen oder Säurechloridgruppen benachbarter reaktiver Reste bzw. Polymerketten zu verestern oder aber auch mit weiteren funktionellen Gruppen umzusetzen. Außer der Hydroxylgruppe kommen als freie reaktive Gruppen insbesondere auch Aminogruppen, Mercaptogruppen, Carboxylgruppen oder von Carboxylgruppen abgeleitete funktionell Gruppen, Sulfonsäuregruppen bzw. von dieser Gruppe abgeleitete funktionelle Gruppen, Epoxygruppen sowie weitere funktionelle Gruppen in Frage. Diese Aufzählung soll die Erfindung nur erläutern und keinesfalls begrenzen; der Fachmann kann leicht weitere reaktive Gruppen und Reaktionsmöglichkeiten angeben, ohne daß es einer erfinderischen Tätigkeit bedürfte.

Die zusätzliche Vernetzungsreaktion wird unter geeigneten Bedingungen ausgeführt. So kann die Umsetzung der freien funktionellen Gruppen z.B. durch Temperaturerhöhung oder durch UV-Bestrahlung, ggf. unter Zugabe eines Katalysators, durchgeführt werden. Die Reaktionsbedingungen werden dabei vorzugsweise so gewählt, daß der Umsetzungsgrad der reaktiven Gruppen gezielt beeinflußt und eingestellt werden kann. Bei einer hohen Konzentration reaktionsfähiger Reste und/oder bei einer mehr oder weniger vollständigen Umsetzung der freien funktionellen Gruppen resultiert ein flüssigkristalliner Duromer-Einkristall, während bei niedriger oder mittlerer Konzentration der reaktionsfähigen Reste und/oder unvollständiger Vernetzung ein flüssigkristalliner Elastomer-Einkristall erhalten wird. Die Gesamtvernetzungsdichte liegt bei Elastomeren typischerweise zwischen 2 und 20 % und für Duromere i.a. höher als 50 %; diese Werte können allerdings nur als grobe Richtschnur angesehen werden, und es sind auch größere Abweichungen möglich, da sie von der Molmasse der Ausgangspolymere und/oder -oligomere abhängen.

Das erfindungsgemäße Verfahren erlaubt die Bereitstellung von flüssigkristallinen Elastomer- oder Duromer-Einkristallen, die sich durch einen hohen Ordnungsgrad auszeichnen. Im Unterschied zu herkömmlichen flüssigkristallinen Monodomänen sind die erfindungsgemäßen Elastomere oder Duromere mit fixierter anisotroper Netzwerkstruktur praktisch in jeder beliebigen Geometrie oder Größe herstellbar; so können z.B. Filme, Folien, quaderförmige Körper, Zylinder oder auch weitere Formen erhalten werden. Die Eigenschaften der erfindungsgemäßen flüssigkristallinen Elastomer- oder Duromer-Einkristalle können in weiten Bereichen variiert und im Hinblick auf die jeweilige Anwendung optimiert werden. So kann die Elastizität über den Gesamtvernetzungsgrad eingestellt werden oder es können Bauelemente mit dichroitischen bzw. nicht-linear optischen Eigenschaften erhalten werden, wenn die Gruppe -Sp-B als Chromophor bzw. als NLO-Chromophor ausgebildet wird.

Die erfindungsgemäßen flüssigkristallinen Elastomer- bzw. Duromereinkristalle können für verschiedenste Anwendungen eingesetzt werden. Filme und Folien sind insbesondere als planare Wellenleiter einsetzbar. Lokale Direktorumorientierungen oder lokale Änderungen der Brechungsindices ermöglichen die Herstellung von integrierten optischen Bauelementen, wie dies in WO 89/09149 beschrieben ist, wobei bei Anwendung des erfindungsgemäßen Verfahrens im Unterschied zu WO 89/09149 die optischen Strukturen dauerhaft erhalten bleiben. Weiterhin können die erfindungsgemäßen flüssigkristallinen Elastomer- oder Duromereinkristalle zur Herstellung von Frequenzverdopplern, Pockels-Zellen, Kerr-Zellen und dichroitischen Filtern hoher Güte und von weiteren optischen Bauelementen verwendet werden.

Die erfindungsgemäßen flüssigkristallinen Elastomer- bzw. Duromer-Einkristalle weisen die bei herkömmlichen flüssigkristallinen Monodomänen auftretenden Nachteile nicht oder nur in geringerem Ausmaß auf und ihnen kommt daher ebenso wie dem erfindungsgemäßen Verfahren eine erhebliche wirtschaftliche Bedeutung zu.

Die nachfolgenden Beispiele sollen die Erfindung erläuterten, ohne sie zu begrenzen.

### Beispiel 1

### a) Herstellung des flüssigkristallinen Polymers

Die folgenden Komponenten

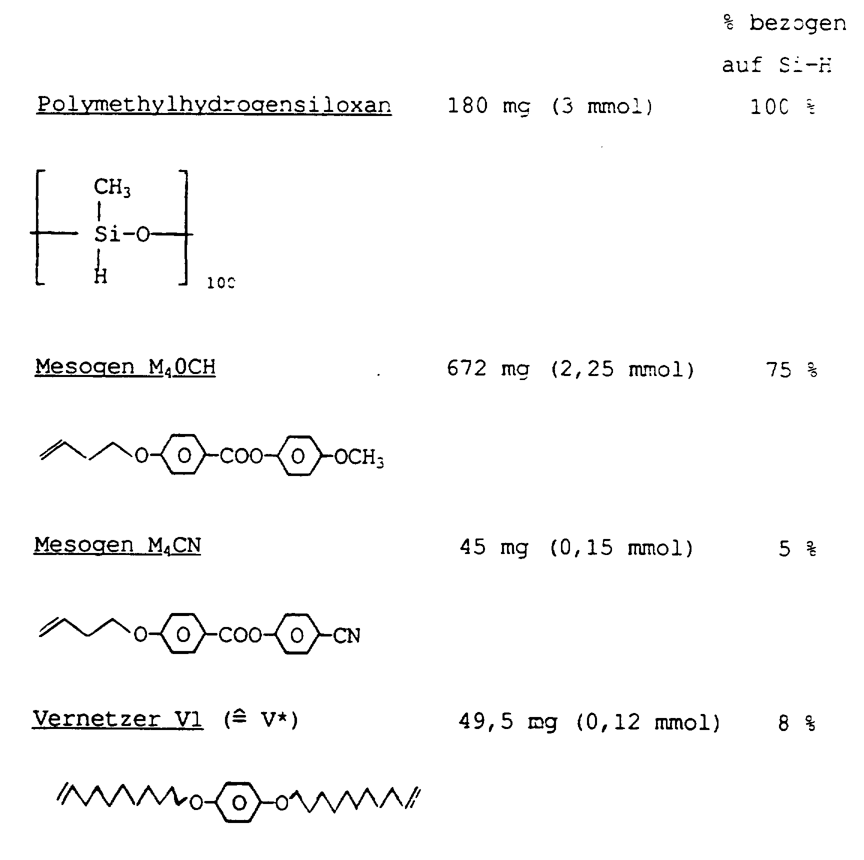

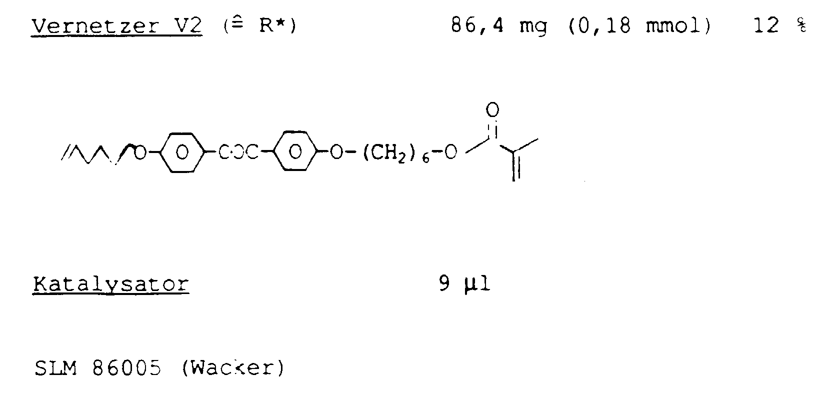

werden in 3 ml wasser- und thiophenfreiem Tolul gelöst. Die polymeranaloge Umsetzung wird nach dem sog. Spin-Casting-Verfahren durchgeführt. Dazu wird obige Lösung durch einen 0,5 µm Filter (Millipore Corp.) filtriert und direkt in einen staubfreien Zentrifugenbecher eingespritzt. Die innere Wandung des Bechers ist mit einer Teflon-Folie ausgekleidet. Der Zentrifugenbecher wird verschlossen und in die Zentrifuge eingesetzt. Dann wird die Reaktionslösung bei 60 °C 70 Minuten lang zentrifugiert.

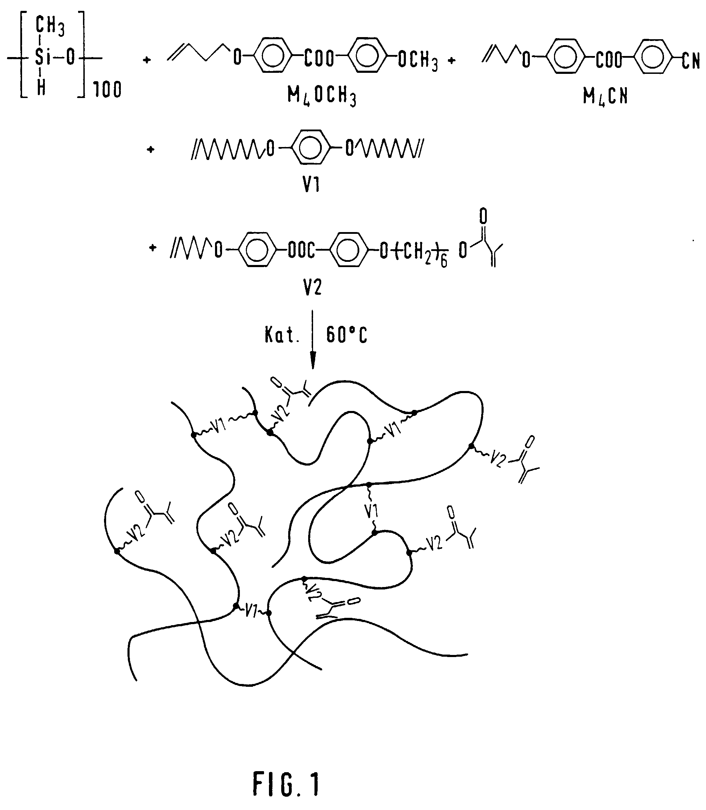

Die Herstellung des flüssigkristallinen Elastomers mit freien funktionellen Gruppen durch Addition der Vinylgruppen an die Si-H-Gruppierung des Polymethylhydrogensiloxans ist schematisch in Fig. 1 gezeigt.

Anschließend wird der Zentrifugenbecher im Kühlraum auf eine Temperatur von 0 °C abgekühlt. Der Deckel wird entfernt und die Teflonfolie mit dem auf ihr haftenden, gequollenen Elastomer entnommen.

### b) Orientierung des Elastomers

An einem Ende des auf der Teflonfolie haftenden Elastomers wird möglichst schnell ein Stück Klebeband befestigt und das Elastomer wird dann langsam von der Teflonfolie gelöst und vorsichtig aufgehängt. Das Elastomer hat folgende Abmessungen:

| | |
|---|---|
| Dicke | 338 µm |
| Länge | 120 mm |
| Breite | 15 mm |

Das zunächst aufgequollene, transparente Elastomer entquillt und wird langsam trübe. Sobald die Trübung deutlich erkennbar ist, wird das hängende Elastomer am freien Ende mit einem Gewicht belastet. Das Gewicht wird sehr vorsichtig vergrößert, bis das trübe Elastomer wieder vollständig transparent wird.

### c) Fixierung der Orientierung

Nach etwa 30 Minuten wird das hängende, belastete Elastomer in einen Trockenschrank gebracht und bei ca. 30 °C 10 Stunden lang getempert. Danach wird die Temperatur auf ca. 50-70 °C erhöht und das Elastomer wird weitere 72 Stunden lang getempert.

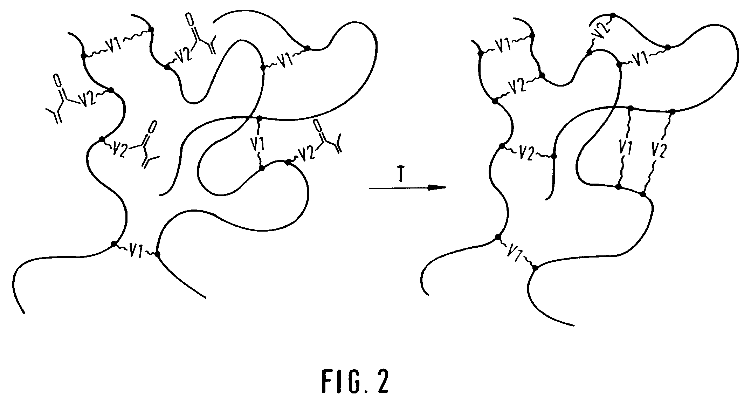

Die Fixierung der anisotropen Netzwerkstruktur durch Umsetzen der noch freien Methacrylsäuredoppelbindungen mit der Si-H-Grupierung ist schematisch in Fig. 2 gezeigt.

Anschließend wird die zweite Vernetzungsreaktion (= Umsetzung der reaktiven Reste) beendet und das erhaltene flüssigkristalline Elastomer mit fixierter anisotroper Netzwerkstruktur wird im Vakuum vollständig getrocknet.

### d) Eigenschaften des flüssigkristallinen Elastomer-Einkristalls.

Der durch Messung des IR-Dichroismus bestimmte Ordnungsgrad (S = ε_{∥} - ε_{⊥}/ε_{∥} + 2 ε_{⊥} ) beträgt S = 0,72 und die Doppelbrechung ist Δn = 0,15 (λ = 633 nm, T = 25 °C).

Der Elastomer-Einkristall zeigt bei einer Quellung in Toluol ein stark anisotropes Quellungsverhalten:
α_{Länge} = 1,10
α_{Breite} = 2,05
α_{Dicke} = 2,07
wobei α die auf den ungequollenen Zustand bezogene relative Änderung angibt.

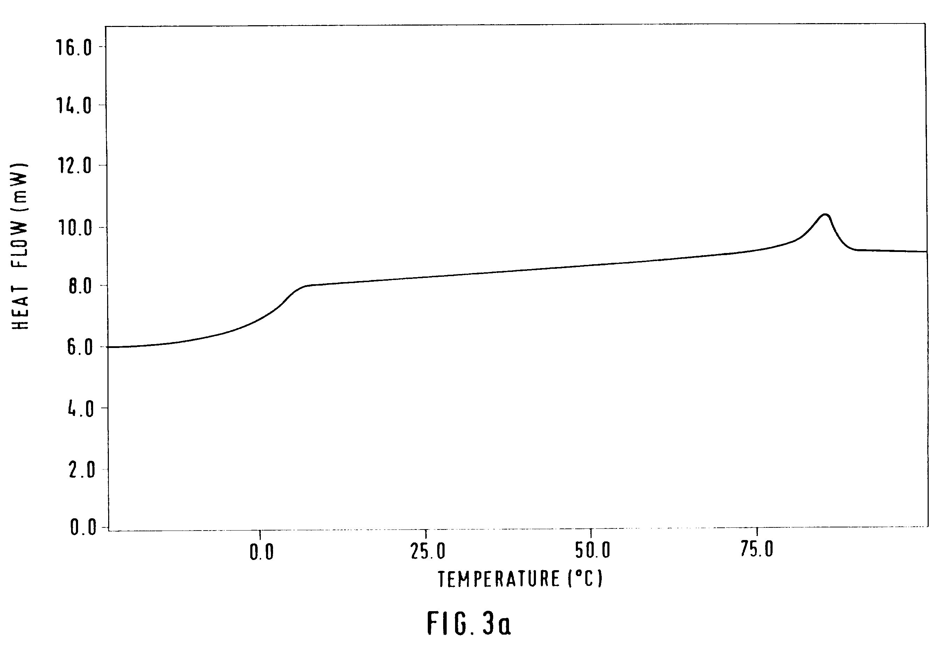

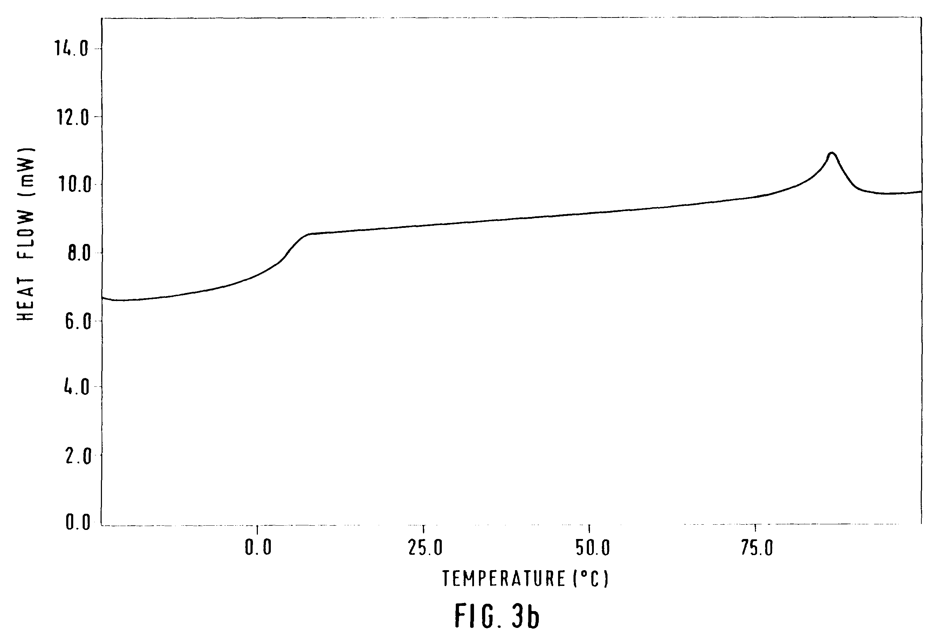

Die DSC-Diagramme für das nicht orientierte Elastomer aus Beispiel la bzw. den orientierte Elastomer-Einkristall aus Beispiel lc sind in Fig. 3a bzw. 3b gezeigt. Die Heizgeschwindigkeit betrug in beiden Fällen 9 °C/min; die Probenmenge des ungeordneten Elastomers war 25,62 mg und die des Elastomer-Einkristalls 24,91 mg. Man erkennt aus diesen Figuren, daß der Klärpunkt des geordneten Elastomers um etwa 1 °C gegenüber dem des ungeordneten Elastomers erhöht ist; diese Klärpunkterhöhung entspricht den theoretischen Erwartungen (vgl. J. Schätzle et al. Makrom. Chem., 190 (1989) 3269).

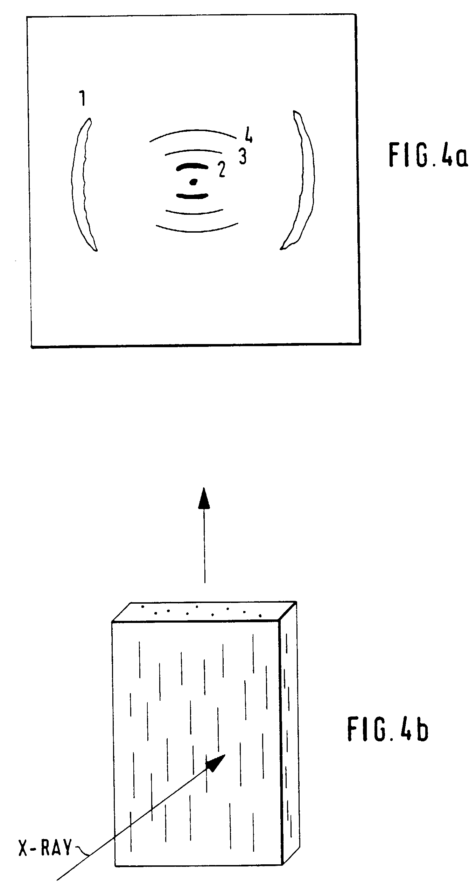

In Fig. 4a ist für einen gemäß Beispiel 1a-c hergestellten Film (Dicke = 338 µm) ein Röntgenstrahldiffraktogramm gezeigt und aus Fig. 4b ersieht man, daß die Probe senkrecht zu der bei der Orientierung gewählten Zugrichtung von den Röntgenstrahlen beaufschlagt wurde; es wurde die Cu_{Kα}-Linie verwendet. In Fig. 4a gilt folgende Zuordnung:
1. 4,2 Å
2. 22,3 Å
3. 11,1 Å
4. 7,2 Å

Aus den gemessenen Werten für n, S und aus dem Röntgenstrahldiffraktogramm kann gefolgert werden, daß die mesogenen Gruppen in dem flüssigkristallinen Einkristall-Elastometer parallel zur bei der Orientierung gewählten Richtung der Zugspannung orientiert sind.

### Beispiel 2

### a) Herstellung des flüssigkristallinen Polymers

Die folgenden Komponenten

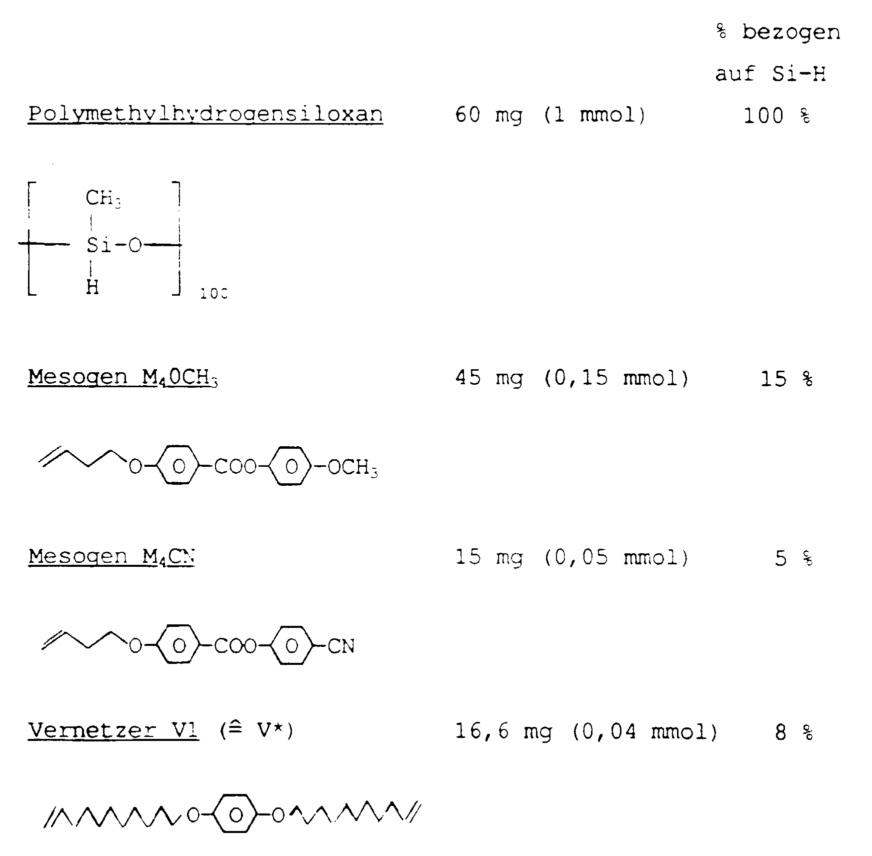

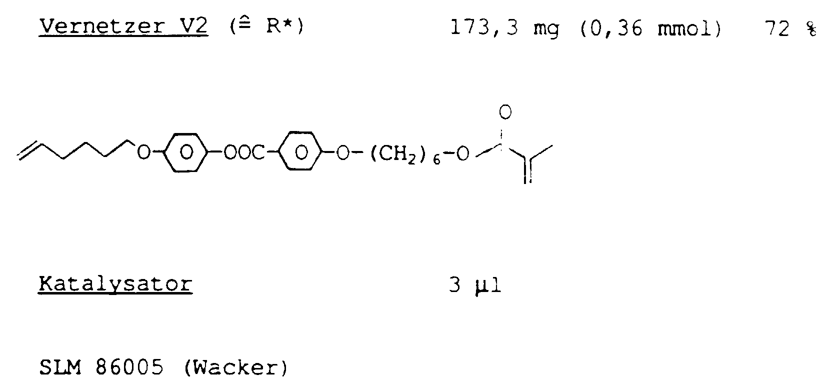

werden in 1 ml wasser- und thiophenfreiem Toluol gelöst. Die polymeranaloge Setzung wird nach dem sog. Spin-Casting-Verfahren durchgeführt. Dazu wird obige Lösung durch einen 0,5-µm-Filter (Millipore Corp.) filtriert und direkt in einen staubfreien Zentrifugenbecher eingespritzt. Die innere Wandung des Bechers ist mit einer Teflon-Folie ausgekleidet. Der Zentrifugenbecher wird verschlossen und in die Zentrifuge eingesetzt. Dann wird die Reaktionslösung bei 60 °C 70 Minuten lang zentrifugiert.

Anschließend wird der Zentrifugenbecher im Kühlraum auf eine Temperatur von 0 °C abgekühlt. Der Deckel wird entfernt und die Teflonfolie mit dem auf ihr haftenden, gequollenen Elastomer entnommen.

### b) Orientierung des Elastomers

An einem Ende des auf der Teflonfolie haftenden Elastomers wird möglichst schnell ein Stück Klebeband befestigt und das Elastomer wird dann langsam von der Teflonfolie gelöst und vorsichtig aufgehängt.

Das zunächst aufgequollene, transparente Elastomer entquillt und wird langsam trübe. Sobald die Trübung deutlich erkennbar ist, wird das hängende Elastomer am freier Ende mit einem Gewicht belastet. Das Gewicht wird sehr vorsichtig vergrößert, bis das trübe Elastomer wieder vollständig transparent wird.

### c) Fixierung der Orientierung

Nach etwa 30 Minuten wird das hängende, belastete Elastomer in einen Trockenschrank gebracht und bei ca. 30 °C 10 Stunden lang getempert. Danach wird die Temperatur stufenweise auf etwa 150 °C erhöht und das Elastomer wird weitere 24 Stunden lang getempert.

Danach ist die zweite Vernetzungsreaktion (= Umsetzung der reaktiven Reste) beendet und das erhaltene transparente Duromer mit fixierter anisotroper Netzwerkstruktur wird im Vakuum vollständig getrocknet.

### d) Eigenschaften des flüssigkristallinen Duromer-Einkristalls

Das Duromer ist hart und spröde und zerbricht bei Belastung glasartig.

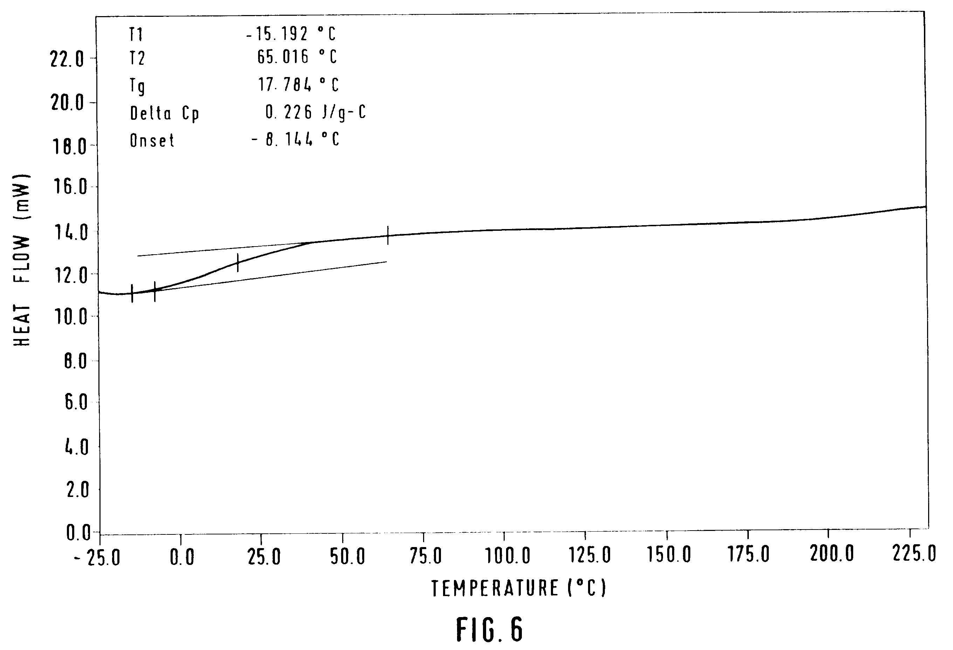

In Fig. 6 ist das DSC-Diagramm für das geordnete Duromer gezeigt. Es ist kein flüssigkristallin-isotroper Phasenübergang beobachtbar und auch im Polarisationsmikroskop ist keine isotrope Phase bis zur Zersetzung des Duromers zu erkennen.

Das erhaltene Duromer ist somit bis zu hohen Temperaturen flüssigkristallin und stabil.

## Patentansprüche

1. Verfahren zur Herstellung von flüssigkristallinen Elastomeren oder Duromeren mit fixierter anisotroper Netzwerkstruktur, dadurch gekennzeichnet, daß flüssigkristalline Elastomere, enthaltend reaktive Reste mit nicht umgesetzten funktionellen Gruppen, in einem ersten Schritt durch Einwirken einer mechanischen Spannung orientiert werden, wobei diese Orientierung in einem nachfolgenden zweiten Schritt durch Verknüpfung zumindestens eines Teils der reaktiven Reste mit Pclymerketten fixiert wird.

2. Verfahren nach Anspruch 1, dadurch gekennzeichnet, daß die flüssigkristallinen Elastomere ausgewählt werden aus der Gruppe Elastomere der Formel I 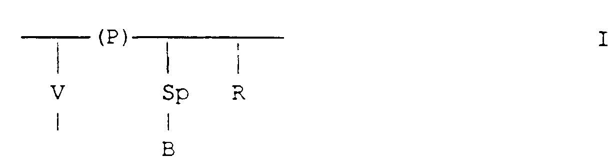 worin
P eine Polymerkette,
Sp eine bivalente Spacergruppe,
B einen organischen "rod-like"-Rest mit mindestens zwei sechsgliedrigen Gruppen, einen "disk-like"- oder einen "board-like"-Rest,
V einen Vernetzer von Polymerketten und
R einen reaktiven Rest bedeuten.

3. Verfahren nach einem der Ansprüche 1 oder 2, dadurch gekennzeichnet, daß das Elastomer in dem ersten Schritt zusätzlich zu der mechanischen Spannung einem elektrischen Feld zur Erzeugung einer bipolaren Orientierung ausgesetzt ist.

4. Flüssigkristallines Elastomer oder Duromer mit fixierter anisotroper Netzwerkstruktur, erhältlich nach einem Verfahren gemäß Anspruch 1 oder 2.

5. Optisches Bauelement, enthaltend ein flüssigkristallines Elastomer oder Duromer nach Anspruch 4.

6. Verwendung der Elastomere und/oder Duromere nach Anspruch 4 in Bauelementen der integrierten Optik, Frequenzverdopplern, Pockels-Zellen, Kerr-Zellen und dichroitischen Filtern.

7. Elastomer der Formel I wie in Anspruch 2 definiert.

8. Verfahren zur Herstellung eines flüssigkristallinen Elastomers nach Anspruch 7, dadurch gekennzeichnet, daß man ein oder mehrere Polymerketten -(P)- mit einer oder mehreren mesogenen Verbindungen Sp-B*, mit einem oder mehreren Vernetzern V* und mit einer oder mehreren Verbindungen vom Typ R* umsetzt.

## Claims

1. Process for the manufacture of liquid-crystal elastomers or thermosetting plastics having a fixed anisotropic reticular structure, characterised in that liquid-crystal elastomers, containing reactive residues having non-reacted functional groups, are orientated in a first step by the action of a mechanical stress, this orientation being fixed in a subsequent, second, step by linking at least some of the reactive residues to polymer chains.

2. Process according to Claim 1, characterised in that the liquid-crystal elastomers are selected from the group of elastomers of formula I 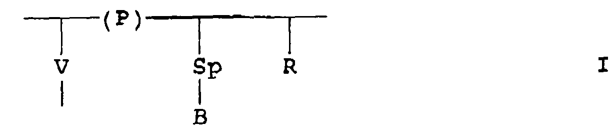 wherein
P is a polymer chain,
Sp is a bivalent spacer group,
B is an organic rod-like residue having at least two six-membered groups, or is a disk-like residue or a board-like residue,
V is a cross-linking agent for polymer chains and
R is a reactive residue.

3. Process according to either Claim 1 or Claim 2, characterised in that the elastomer, in the first step, in addition to being exposed to the mechanical stress, is exposed to an electrical field for the production of a bipolar orientation.

4. Liquid-crystal elastomer or thermosetting plastic having a fixed anisotropic reticular structure, obtainable in accordance with a process according to Claim 1 or 2.

5. Optical component, containing a liquid-crystal elastomer or thermosetting plastic according to Claim 4.

6. Use of the elastomers and/or thermosetting plastics according to Claim 4 in components of integrated optical systems, in frequency doublers, Pockels cells, Kerr cells and dichroic filters.

7. Elastomer of formula I as defined in Claim 2.

8. Process for the manufacture of a liquid-crystal elastomer according to Claim 7, characterised in that one or more polymer chains -(P)- is (are) reacted with one or more mesogenic compounds Sp-B*, with one or more cross-linking agents V* and with one or more compounds of type R*.

## Revendications

1. Procédé de fabrication d'élastomères ou duromères à cristaux liquides à structure en réseau anisotrope fixée, caractérisé en ce qu'on oriente dans une première étape les élastomères à cristaux liquides contenant des radicaux réactifs avec des groupes fonctionnels n'ayant pas réagi, par l'action d'une tension mécanique, cette orientation étant fixée dans une seconde étape qui la suit par une liaison des radicaux réactifs avec des chaînes polymères.

2. Procédé selon la revendication 1, caractérisé en ce que les élastomères à cristaux liquides sont choisis dans le groupe des élastomères de formule I 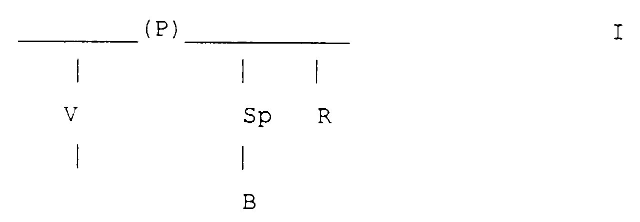 dans laquelle
P représente une chaîne polymère,
Sp représente un groupe espaceur bivalent,
B représente un radical organique de "type bâtonnet" avec au moins deux groupes à six chaînons, un radical de "type disque" ou un radical de "type plaque",
V représente un agent réticulant de chaînes polymères et
R représente un radical réactif.

3. Procédé selon l'une des revendications 1 ou 2, caractérisé en ce que l'élastomère dans la première étape est soumis, outre la tension mécanique, à un champ électrique pour produire une orientation bipolaire.

4. Elastomère ou duromère à cristaux liquides avec structure de réseau anisotrope fixée, que l'on peut obtenir selon un procédé de la revendication 1 ou 2.

5. Elément de construction optique contenant un élastomère ou duromère à cristaux liquides selon la revendication 4.

6. Utilisation des élastomères et/ou duromères selon la revendication 4 dans des éléments de construction d'optique intégrée, de duplicateurs de fréquence, de cellules de Pockels, de cellules de Kerr et de filtres dichroïques.

7. Elastomère de formule I tel que défini dans la revendication 2.

8. Procédé de fabrication d'un élastomère à cristaux liquides selon la revendication 7, caractérisé en ce qu'on fait réagir une ou plusieurs chaînes polymères -(P)- avec un ou plusieurs composés mésogènes Sp-B* , avec un ou plusieurs agents réticulants V* et avec un ou plusieurs composés de type R*.
